# EUROPEAN PATENT SPECIFICATION

(11) **EP 0 342 549 B1**
(45) Date of publication and mention of the grant of the patent: **01.02.1995**
(21) Application number: 89108613.4
(22) Date of filing: 12.05.1989
(51) Int. Cl.: H04N 1/40

(54) **Image processing method**
Bildverarbeitungsverfahren
Procédé pour le traitement d'images

(30) Priority: 16.05.1988 JP 118565/88
(43) Date of publication of application: 23.11.1989
(73) Proprietor: EZEL INC., Setagaya-ku Tokio 155 (JP); SHARP KABUSHIKI KAISHA, Osaka 545 (JP)
(72) Inventor: Kumagai, Ryohei c/o EZEL Inc., Shinjuku-ku Tokyo 160 (JP)
(74) Representative: Grünecker, Kinkeldey, Stockmair & Schwanhäusser Anwaltssozietät

(56) References cited:
- EP-A- 0 096 220
- WO-A-86/05901
- FR-A- 2 293 011
- GB-A- 2 152 324
- CONFERENCE PROCEEDINGS IEEE SOUTHEASTCON '87, Tampa, Florida, 5th - 8th April 1987, vol. 1, pages 1-5, IEEE, New York, US; S.D. TUCKER et al.: "High-speed histogram calculations for real time image processing"

## Description

The present invention relates to an image processing method for processing an image in order to flatten the histogram representation of the density distribution.

From CONFERENCE PROCEEDINGS IEEE SOUTHEASTCON 87, Tampa, Florida, 5th - 8th April 1987, vol. 1, pages 1-5, IEEE, New York, US; S.D. TUCKER et al.: "High-speed histogram calculations for real time image processing",
a method for establishing a histogram representing the density distribution of an image is known. According to that method, each byte of pixel data is latched and used to address a location within a RAM containing pixel count information. The RAM data is fetched and incremented by a counter and then restored within the original location. In that manner the numbers of pixels for each density are counted from which it it possible to establish the histogram.

From WO-A-8605901 an apparatus and method for modifying the brightness levels of three color separation digital images to make them compatible with an output display device which has a fewer number of available brightness levels for each color than the color digital images, is known. Color histograms are produced for each color separation digital image. Each histogram is used for producing a transform function which operates on one of the color separation digital images to perform the following modifications: a predetermined number of the digital pixels having the darkest brightness levels are assigned to the darkest brightness level of the output display device and a predetermined number of the digital pixels having the brightest brightness levels are assigned to the brightest level of the output device. The remaining pixels of the color digital images are assigned to their corresponding remaining output levels of the display device.

It is the object of the present invention to provide an image processing method for flattening the density distribution of an image which can be carried out by a simple hardware and with a high process speed.

This object is solved by the subject matter of claim 1.

Prefered embodiments of the present invention will be described in the following in connection with the drawings, in which
Fig. 1 shows a block diagram of an image processing system useful for carrying out a first embodiment of the present invention;
Fig. 2 shows a block diagram of a count-down circuit of the image processing system;
Fig. 3 shows a table for converting densities;
Fig. 4 shows a block diagram of another image processing system.

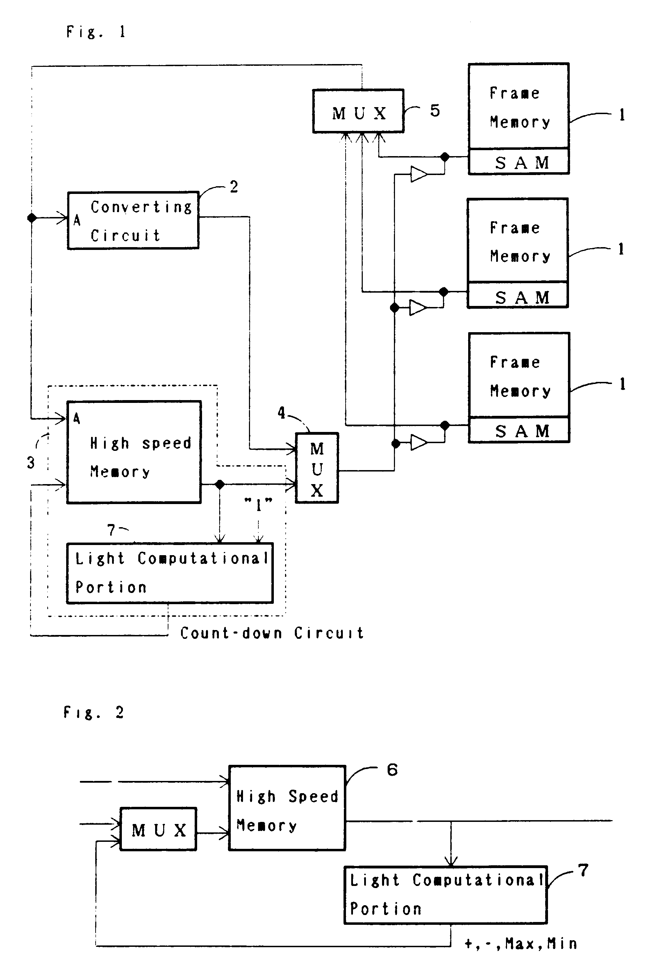

In Fig. 1, an image processing system for an embodiment of the present invention comprises a plurality of frame memories 1, a converting circuit 2 and a count-down circuit 3, to which circuits an image data is inputted from one of the frame memories 1. The output of the circuits 2 and 3 is inputted through a multiplexer to one of the frame memories 1.

The outputs of the frame memories 1 are selected by a multiplexer 5 so that the output of one of the frame memories is selectively inputted to the circuits 2 and 3.

The countdown circuit 3 comprises a high speed memory 6 and a light computational portion 7 to which the output of the high speed memory 6 is inputted. The high speed memory 6 comprises a static RAM (random access memory) or any other high speed memory. The output of the light computational portion 7 is inputted to a data input of the high speed memory 6 so that data in an read from a certain address is calculated and then again stored under the same address. In this embodiment, the light computational portion 7 comprises an subtracter for subtracting the inputted data by "1" and for storing the subtraction result under the same address.

The converting circuit 2 comprises a high speed memory for storing a density to which a number of pixels of another density is partially moved.

The address where the density stored is thereby designated by the density from which the number of pixels is partially moved.

The density stored is called "converting density" hereinafter. Switching the converting circuit into a read mode and inputting pixel data (density) to an address input to the converting circuit 2 from the frame memory 1, the respective converting density to the inputted density is outputted. The converting density is written in the address of the frame memory, from where the inputted pixel data, is read out so as to generate an image, with a converted image histogram.

In the count-down circuit 3, the number of pixels of a density to be converted to another density is stored in an address designated by the density of the former. The number in an address of the circuit 3 is decreased by "1" on every conversion of one pixel of the density. The decreasing is performed by the light computational portion 7. When such a number is decreased down to "0", it is not further decreased. For preventing the decreasing for a density, data writing of the density (address) is prevented or decrement value in the light computational portion for the density is changes to "0", or any other manners can be applied. When the number of a density becomes "0", the density conversion of the density should not be performed thereafter. So the multiplexer 4 is controlled so that the number "0" stored in the high speed memory is written in the frame memory 1. The number "0" is an index indicating that the pixel is not converted in the histogram, in this case. The density for the index can be any other density not included in the image. In the above processing, a number of pixel of one density is partially moved to another density. For partial distribution of a number of pixels to other densities, only not indexed pixels are processed in the same manner as the above. When number of pixels of one density is distributed to 3 densities, 3 times scanning of an image is necessary.

The count-down circuit 3 performs various calculations by defining the calculation manner of the light computational portion. The calculation manner may be addition, MAX, MIN etc. This enables counting-up, maximum extraction, minimum extraction etc. When the data outputted from the high speed memory is directly outputted without calculation in the light computational portion, the count-down circuit can be used as a converting circuit. When the light computational portion is defined as an adder and the density of each pixel is inputted to the address input of the high speed memory 6, a histogram is easily generated. In this processing, the light computational portion increases the data outputted from the high speed memory by "1" so as to count the number of pixels of each density. Before the flattening of the histogram, histogram is naturally generated. An adder with a performance of complement generation can be used as a subtracter. So a light computational portion of such a type can be easily changed in calculation manner.

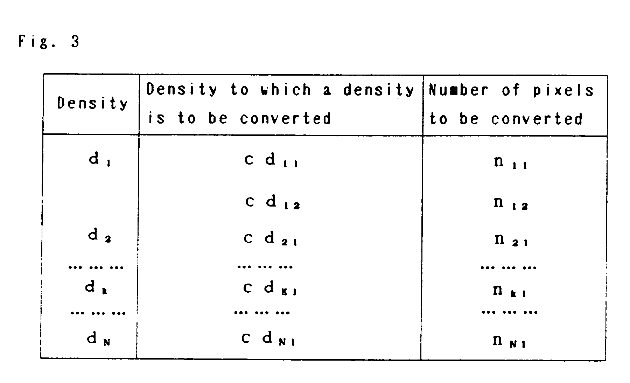

From a histogram, a table can be generated as shown in Fig. 3. This table is called "density converting table" hereinafter. There are indicated in the table, to which density a density is to be converted, and how many pixels of each density are to be converted. In Fig. 3, each density is indicated by d₁ to d_{N}, densities to which the densities d₁ to d_{N} are to be converted are indicated by cdᵢⱼ. The number of pixels to be converted from each density is indicated by nᵢⱼ. As for the density d₁, n₁₁ pixels are to be converted to the density cd₁₁ and n₁₂ pixels are to be converted to the density cd₁₂. In the first scanning, the conversion from d₁ to cd₁₁ is performed. When n₁₁ times conversion is finished, the data in the address d₁ of the high speed memory becomes "0".

Thereafter, pixels of density d₁ are changed to the index density of "0". In the second scanning, data cd₁₂ is registered in the address d₁ of the converting circuit, data n₁₂ is registered in the address d₁ of the high speed memory 6. By the processing similar to that of the first scanning, rest of the pixels of density d₁ are converted to the density cd₁₂. Therefore, maximal number of densities to which a density is converted defines the total scanning times.

When a dual-port memory is used for the frame memory 1 in the circuit as well as the total system is constructed as a pipe-line system in Fig. 1, the process speed will become about 1/30 (sec/frame) for an image of 512x512x8bit. 30 times scanning will be performed in 1 sec.

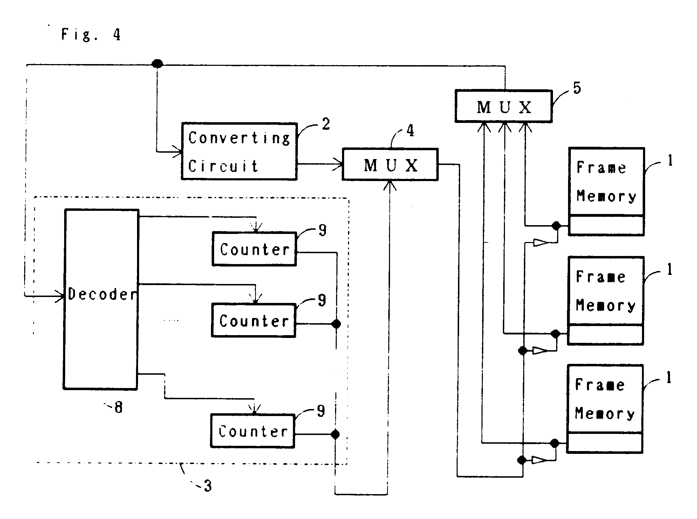

Fig. 4 shows another embodiment of the image processing system, which is different only in the count-down circuit from that of the system in Fig. 1. Therefore, portions are designated by the same references as that in Fig. 1.

The count-down circuit 3 in Fig. 4 comprises a decoder 8 and a counter 9 in which the number of pixels to be converted are registered. The counter 9 is provided for each density, or the number of counters 9 is more than the number of densities. Each counter 9 is connected to a different output of the decoder 8. The decoder 8 enables one of the counters 9 to output registered data as well as to decrease the data by "1". The output of each counter 9 is transmitted to a multi-plexer 4 which is connected to the data output of the converting circuit 2. When the output "0" is transmitted to the multi-plexer 4 from a counter 9, the multi-plexer 4 prevents the output of the converting circuit 2 from passing therethrough. By this construction, the performance similar to that of the circuit in Fig. 1 can be obtained.

## Claims

1. An image processing method for processing an image signal in order to flatten the histogram representation of the density distribution of the image by allocating pixels of one density to two or more densities, comprising the following steps :
a density conversion table is generated for indicating to which one of a second set of densities each of a set of first densities is to be converted, as well as how many pixels are to be converted;
each of said second densities is stored in a memory location in a converting circuit having an address designated by said first density, and said number of pixels to be converted is stored in a countdown circuit;
the first density of each pixel of an image is inputted to said converting circuit and said countdown circuit so that said second density is outputted from said converting circuit and that said number in an address designated by said first density of each pixel is decreased by "1" on each input of said second density;
said first density of each pixel is converted to the second density until said number is decreased to zero.

2. An image processing method according to claim 1 wherein pixels with densities which are not further changed are indexed in order not to be processed in the further scanning of the image.

3. An image processing method according to claim 1 or 2 wherein said countdown circuit comprises a high speed memory (6) and a light computational portion (7) which receives as a data input output data from the high speed memory and applies output data as input data to the high speed memory.

4. An image processing method according to claim 3 wherein said light computational portion (7) comprises a subtracter.

5. An image processing method according to any one of the preceeding claims wherein said countdown circuit comprises a decoder (8) and a plurality of counters (9), said decoder (8) designating one of said counters according to the density of each of said pixels so as to decrease data in said counter.

## Patentansprüche

1. Bildverarbeitungsverfahren zum Verarbeiten eines Bildsignals, um die Histogrammdarstellung der Dichteverteilung des Bildes abzuflachen, indem Pixel mit einer Dichte, zwei oder mehr Dichten zugewiesen werden, wobei das Verfahren folgende Schritte aufweist:
Erzeugen einer Dichteumwandlungstabelle zum Anzeigen, in welche Dichten eines Satzes aus zweiten Dichten jede Dichte eines ersten Satzes von Dichten umgewandelt werden soll sowie zum Anzeigen, wieviele Pixel jeweils umgewandelt werden sollen;
Speichern einer jeden zweiten Dichte in einem Speicherplatz in einem Umwandlungsschaltkreis, wobei dies an einer Adresse erfolgt, die durch die erste Dichte bestimmt wird und Speichern der Anzahl der Pixel, die umgewandelt werden sollen in einem Abzählschaltkreis;
Eingeben der ersten Dichte eines jeden Pixels eines Bildes in den Umwandlungsschaltkreis und in den Abzählschaltkreis, so daß die zweite Dichte von dem Umwandlungsschaltkreis ausgegeben wird und die Anzahl, die unter einer Adresse, die durch die erste Dichte eines jeden Pixel bestimmt wird, gespeichert ist, jedes Mal um 1 erniederigt wird, wenn eine zweite Dichte eingegeben wird;
Umwandeln der ersten Dichte eines jeden Pixels in die zweite Dichte, bis die Anzahl auf 0 abgenommen hat.

2. Bildverarbeitungsverfahren nach Anspruch 1, bei dem Pixel, die Dichten aufweisen, die nicht weiter verändert werden, indiziert werden, um zu vermeiden, daß diese in weiteren Abtastschritten des Bildes weiter verarbeitet werden.

3. Bildverarbeitungsverfahren nach Anspruch 1 oder 2, bei dem der Abzählschaltkreis einen Hochgeschwindigkeitsspeicher (6) und eine einfache Rechnungseinheit (7) aufweist, die als Dateneingang Ausgangsdaten von dem Hochgeschwindigkeitsspeicher enthält und Ausgangsdaten als Eingangsdaten dem Hochgeschwindigkeitsspeicher zuführt.

4. Bildverarbeitungsverfahren nach Anspruch 3, bei dem die einfache Berechnungseinheit (7) einen Subtrahierer aufweist.

5. Bildverarbeitungsverfahren nach einem der vorhergehenden Ansprüche, bei dem der Abzählschaltkreis einen Decoder (8) und eine Vielzahl von Zählern (9) aufweist, wobei der Decoder (8) einen der Zähler entsprechend der Dichte eines jeden Pixels bestimmt, so daß die Daten in den Zähler erniedrigt werden.

## Revendications

1. Procédé de traitement d'image pour traiter un signal d'image afin d'aplanir la représentation par histogramme de la distribution de densité de l'image en allouant des pixels d'une densité à deux densités ou plus, comprenant les étapes suivantes :
une table de conversion de densité est générée pour indiquer selon laquelle d'un second jeu de densités chacune d'un jeu de premières densités doit être convertie, ainsi que combien de pixels doivent être convertis ;
chacune desdites secondes densités est stockée en un emplacement mémoire dans un circuit de conversion présentant une adresse désignée par ladite première densité et ledit nombre de pixels qui doivent être convertis est stocké dans un circuit de décomptage ;
la première densité de chaque pixel d'une image est entrée sur ledit circuit de conversion et sur ledit circuit de décomptage de telle sorte que ladite seconde densité soit émise en sortie depuis ledit circuit de conversion et que ledit nombre contenu dans une adresse désignée par ladite première densité de chaque pixel soit diminué de "1" lors de chaque entrée de ladite seconde densité ;
ladite première densité de chaque pixel est convertie en la seconde densité jusqu'à ce que ledit nombre soit diminué jusqu'à zéro.

2. Procédé de traitement d'image selon la revendication 1, dans lequel les pixels présentant des densités qui ne sont pas encore modifiées sont indexés afin de ne pas être traités lors du balayage suivant de l'image.

3. Procédé de traitement d'image selon la revendication 1 ou 2, dans lequel ledit circuit de décomptage comprend une mémoire haute vitesse (6) et une partie de calcul de lumière (7) qui reçoit en tant qu'entrée de données les données émises en sortie depuis la mémoire haute vitesse et qui applique des données de sortie en tant que données d'entrée sur la mémoire haute vitesse.

4. Procédé de traitement d'image selon la revendication 3, dans lequel ladite partie de calcul de lumière (7) comprend un soustracteur.

5. Procédé de traitement d'image selon l'une quelconque des revendications précédentes, dans lequel ledit circuit de décomptage comprend un décodeur (8) et une pluralité de compteurs (9), ledit décodeur (8) désignant l'un desdits compteurs conformément à la densité de chacun desdits pixels de manière à diminuer les données dans ledit compteur.
